# EUROPEAN PATENT APPLICATION

(11) **EP 1 881 175 A1**
(43) Date of publication of application: **23.01.2008**
(21) Application number: 07112308.7
(22) Date of filing: 12.07.2007
(51) Int. Cl.: F02B 69/02, F02D 19/06, F02M 59/44, F02M 31/125

(54) **Biofuel plant particularly for generating electric power and for cogeneration**

(30) Priority: 20.07.2006 IT PD20060290
(71) Applicant: Movendi s.r.l., 37100 Verona (IT)
(72) Inventor: Pagnucco, Nicolino, 33030, Rivis di Sedegliano UD (IT)
(74) Representative: Modiano, Micaela Nadia

(57) **Abstract**

A biofuel plant particularly for generating electric power, comprising a first circuit (11) for storing and pretreating a fluid biofuel and a second supply circuit (12) for a compression-ignition internal-combustion reciprocating engine (13). The first circuit (11) comprises a storage tank (14) from which, by means of a transfer pump (15), the biofuel (16) is drawn and sent to a tank (17) for regulating the temperature of the biofuel; the second circuit (12) is constituted by the temperature regulating tank (17), in parallel to which there is an additional auxiliary tank (21) for another fuel for starting and stopping the engine (13), and by a line (22) for supplying the engine (13) which is provided with an intake pump (23) and with a switching valve (24) for selecting the tank (17, 21) from which drawing is to be performed. A heating device (25) for the biofuel is arranged on the supply line (22) and is arranged upstream of the fuel injection pump (29).

## Description

The present invention relates to a biofuel plant for generating electric power and for cogeneration.

Biofuels can be of the solid (pellet, chipwood, wood), liquid or gaseous type; in particular, according to European directive 2003/30/EC dated 8 May 2003, a 'biofuel' is "liquid or gaseous fuel produced from biomass"; moreover, the following paragraph of the same directive defines 'biomass' as "the biodegradable fraction of products, waste and residues from agriculture (including vegetal and animal substances), forestry and related industries, as well as the biodegradable fraction of industrial and municipal waste".

Currently it is known, and increasingly topical due to the growing problems related to the acquisition and use of oil, to use internal-combustion reciprocating engines, generally of the diesel type, i.e., of the compression-ignition type, supplied with biofuels.

These engines are used mainly for motor vehicles, but only in developing countries (for example Brazil) in which there is a large availability of biomass, or in European countries, such as currently Austria and Germany, in which tax incentives alleviate the costs for the design and manufacturing modifications of such engines.

The use of biofuels, such as for example vegetable oils, biodiesel and bioethanol, in diesel engines, while allowing to reduce CO₂ emissions and carbon monoxide, sulfur dioxide and particulate emissions with respect to gasoline and diesel fuel, is in fact still not widespread due to the tuning that the engines must undergo in order to be efficient and strong in operation with such biofuels.

For example, vegetable oils have a higher viscosity than diesel fuel and generally tend to vitrify if they cool rapidly and to adhere to the ordinary metallic alloys with which for example the pistons of a diesel engine are currently manufactured.

The needles of the injectors of the engine and the pistons of the pumping elements of the injection pump also are subjected to wear due to friction and physical-chemical attack on the part of the vegetable oils.

The aim of the present invention is to provide a biofuel plant for generating electric power and for cogeneration which runs on biofuel.

Within this aim, an object of the present invention is to provide a plant equipped with an engine which is set up to run with biofuel more efficiently than known engines and is more resistant to the action of the biofuel used with respect to known engines.

Another object of the present invention is to provide a plant which is capable of generating clean energy, without carbon dioxide and with considerably reduced emissions of particulate and carbon monoxide with respect to diesel-fuel electric power generation plants.

Another object of the present invention is to provide a plant which can be managed easily even remotely.

Another object of the present invention is to provide a plant which can be set up with known equipment and technologies.

This aim and these and other objects, which will become better apparent hereinafter, are achieved by a biofuel plant particularly for generating electric power, characterized in that it comprises a first circuit for storing and pretreating a fluid biofuel and a second supply circuit for at least one compression-ignition internal-combustion reciprocating engine, said first circuit in turn comprising a storage tank from which, by means of a pump, the biofuel is drawn and sent to a tank for regulating the temperature of said biofuel, a one-way valve and a filter for the biofuel being provided on the connection line between said storage tank and said temperature regulating tank, said second circuit being constituted by said temperature regulating tank, in parallel to which there is an additional auxiliary tank for an additional fuel for engine starting and stopping, and by a line for supplying said engine which is provided with an intake pump, said line being functionally connected to said tanks by means of the interposition of a switching valve for selecting the tank from which drawing is to be performed, said line being also provided with a heating device for the biofuel, at least one filter which is interposed between the pump and the valve, and an additional filter which is interposed between said heating device and an injection pump which, by means of an associated distribution unit, is adapted to propel the aspirated fuel into the cylinders of said engine.

Further characteristics and advantages of the invention will become better apparent from the following detailed description of a preferred but not exclusive embodiment thereof, illustrated by way of non-limiting example in the accompanying drawings, wherein:

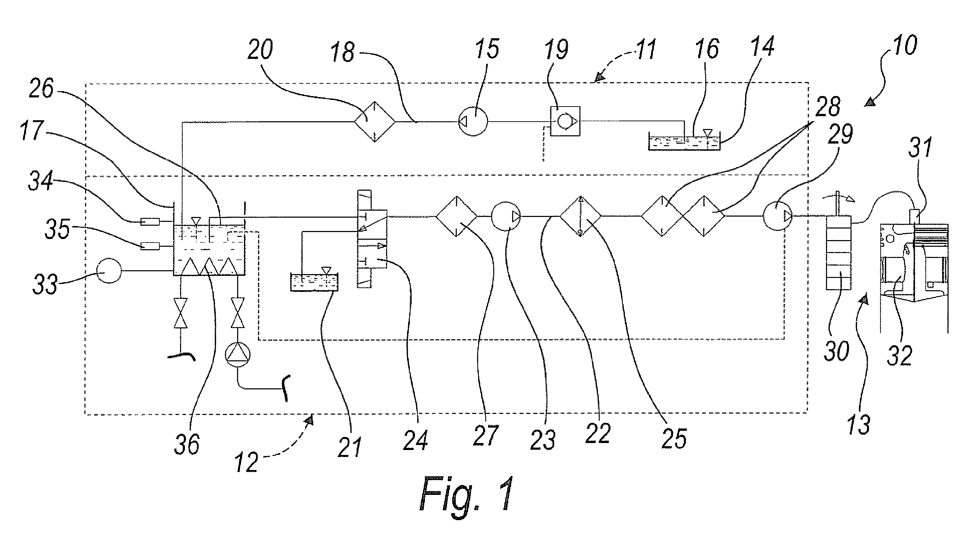

Figure 1 is a diagram of the plant according to the invention;
Figure 2 is a view of a first detail of the engine with which the plant according to the invention is provided;
Figure 3 is a view of a second detail of the engine;
Figure 4 is a sectional view of a detail of the injection pump;
Figure 5 is a sectional view of the heating device of the plant according to the invention.

With reference to the figures, a biofuel plant particularly for generating electric power and for cogeneration, according to the invention, is generally designated by the reference numeral 10.

The plant 10 comprises a first storage and pretreatment circuit 11 for a fluid biofuel and a second supply circuit 12 for a compression-ignition internal-combustion reciprocating engine 13.

The first circuit 11 comprises a first storage tank 14, the capacity of which must be related to the power of the supplied engine, and in the example described here said capacity is approximately 15,000 liters; the storage tank 14 can be underground or above ground.

From the storage tank 14, by means of a transfer pump 15, biofuel 16, exemplified here in the liquid state, is drawn and sent to a second tank 17 for regulating the temperature of said biofuel; the temperature regulating tank 17 is provided with temperature sensors 33 and with level sensors, a maximum-level sensor 34 and a minimum-level sensor 35.

The biofuel 16 is selectively vegetable oil, biodiesel or another equivalent liquid fuel obtained from biomass.

The second tank 17 is constituted by a stainless steel box-like body, which is heated by way of exchanger means 36 which are supplied with hot water, which arrives for example from the engine 13, and by means of electric resistors of the known type, which are not shown for the sake of simplicity.

A one-way valve 19 and a first filter 20 for the biofuel are provided on the line 18 of the first circuit 11 for connection between the first storage tank 14 and the second temperature regulating tank 17.

The second circuit 12 comprises the second temperature regulating tank 17, in parallel to which there is a third tank 21 for an additional fuel for starting and stopping the engine 13; in the embodiment of the plant 10 according to the invention, which is non-limiting, said additional fuel is of the type which is not obtained from biomass, for example diesel fuel, but can also be of a type obtained from biomass, despite being different from the biofuel 16.

The second circuit 12 has a line 22 for supplying the engine 13, which is provided with an intake pump 23 and is functionally connected to the second tank 17 and the third tank 21 by interposing a switching valve 24 for selecting the tank from which drawing is to occur.

The switching valve 24 is constituted by an electric valve whose operating logic, described in greater detail hereinafter, is managed by an electronic control unit of the plant 10, which simultaneously manages and monitors also all the other parameters of the other components of the plant 10.

On the line 22 of the second circuit 12 there is a heating device 25 for the thermally adjusted biofuel 26, a second filter 27 which is interposed between the pump 23 and the valve 24, and a pair of second filters 28 which are interposed between the heating device 25 and an injection pump 29 which, by means of an associated distribution unit 30, propels the drawn fuel into injectors 31 of the cylinders of the engine 13.

The diesel engine 13, in the embodiment of the plant 10 described here by way of non-limiting example of the invention, is of the six-cylinder four-stroke type.

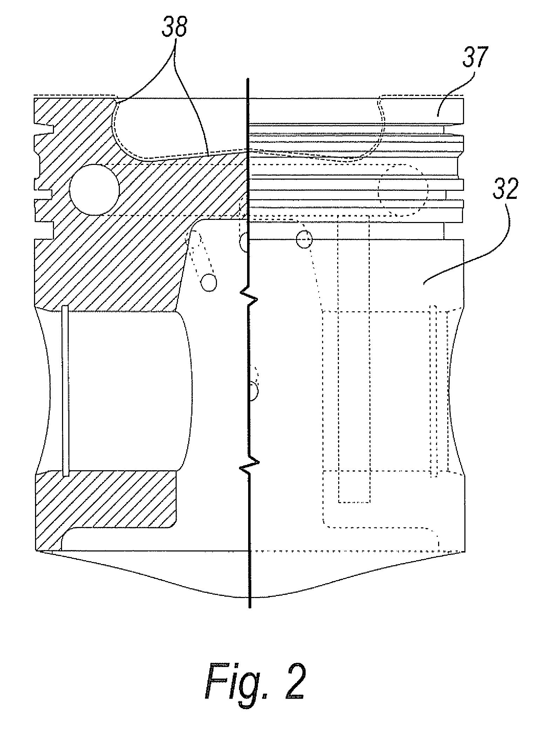

Heads 37 of the pistons 32, one of which is shown by way of example in Figure 2, are at least partly coated with a ceramic protective layer 38.

The coated surface is the one directed toward the combustion chamber and comes into direct contact with the biofuel.

In the embodiment described here, which is non-limiting for the invention, the ceramic layer 38 is of the DLC (Diamond-Like Carbon) type, made of carbon with substantially diamond-like hardness.

The layer 38 has two functions: the first is to prevent the formation of deposits on the underlying protective surface and the second is to reduce heat losses through the piston 32, increasing the available mechanical power.

The layer 38, which is approximately 0.2 mm thick, allows to keep the geometry of the component unchanged.

The deposition of the layer 38 can be performed with known methods used to prepare tools for machines for working metal, such as milling machines and lathes.

The layer 38 causes the biofuel that remains inside the chamber to cool a little more slowly, reducing its risk of vitrification and at the same time preventing its adhesion to the piston 32, protecting the piston against the chemical attacks of said biofuel.

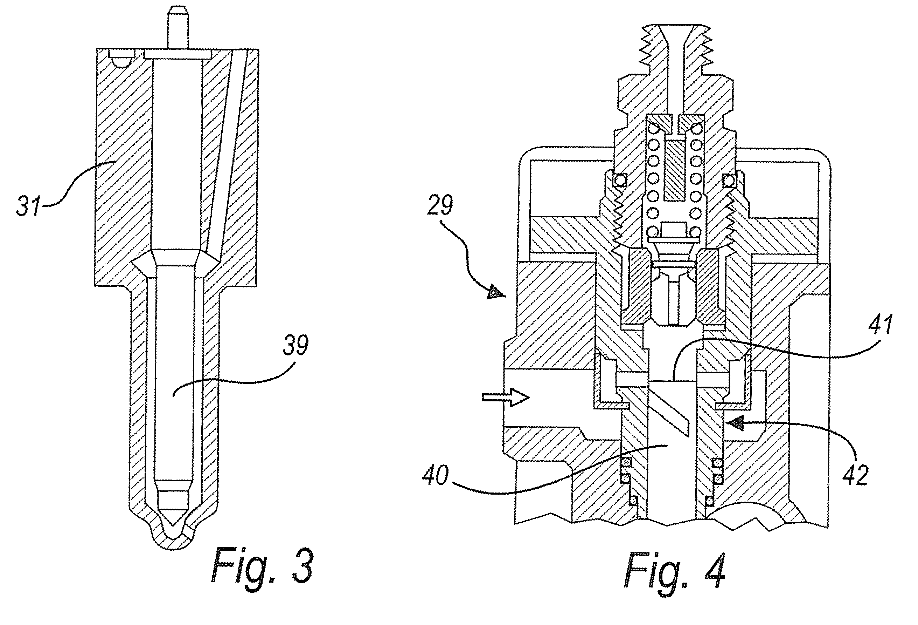

Likewise, needles 39 of the injectors 31, one of which is shown schematically by way of example in Figure 3, of the engine 13 have on their surface selectively either a passivating treatment or a ceramic coating.

Both solutions reduce wear due to friction, and therefore the risk of seizure, and the chemical-physical attack of the biofuel, and are designed to improve the durability of the needles, which are subjected to intense thermal and mechanical stresses.

The choice of the technique to be applied, between passivating treatment and ceramic coating, depends on the size of the needle and therefore on the imposed tolerance limits, and on the material of which it is made.

In some cases it is possible to adopt both solutions.

Likewise, the compression surface 41 of pistons 40 of pumping elements 42 of the injection pump 29 (a portion of which is shown schematically in cross-section by way of example in Figure 4) selectively has either a passivating treatment or a ceramic coating.

Both solutions reduce friction due to wear and therefore the risk of seizure, and the chemical-physical attack of the biofuel, and, as for the needles 39, are designed to improve their resistance to thermal and mechanical stresses.

In this case also, the choice of the technique to be applied, between passivating treatment and ceramic coating, depends on the size of the piston, and therefore on the imposed tolerance limits, and on the material of which it is made.

For the needles 39 and the pistons 40, the DLC layer also has characteristics of a solid lubricant.

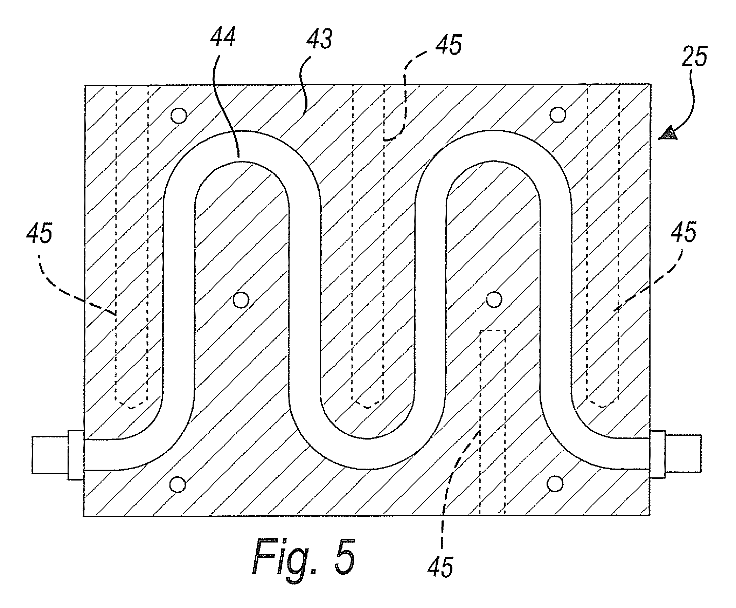

The heating device 25 for the fuel is provided by a plate-like body 43, which is shown in cross-section in Figure 5 and inside which there is a coiled duct 44 in which the biofuel or diesel fuel flows, and seats 45 for electric heating elements.

The heating device 25, provided with a thermostat which is not shown for the sake of simplicity, is installed ahead of the pair of filters 28 for the biofuel indeed to ensure that such biofuel can be filtered.

In another embodiment of the plant 10, not shown for the sake of simplicity, the heating device 25 is installed after the pair of filters 28.

The device 25 raises the temperature of the biofuel, for example a vegetable oil, in order to achieve its correct atomization at the output of the injectors 31, and is capable of providing a greater heating power than similar devices that are already commercially available (proportionally, 1000 W versus 300-500 W of known devices).

The device 25 is interposed between the intake pump 23 and the pair of filters 28 in series which precede the injection pump 29, and is positioned appropriately so as to allow to raise the temperature of the biofuel without damaging other parts of the engine 13 which can deteriorate if subjected to excessively high temperatures.

The plant 10 is completed by an exhaust gas treatment device, of a per se known type which is not shown, for controlling the values of the pollution burden and the odors, and by an electronic controller, also not shown, which is provided with a modem for remote data reading, sending malfunction signals and in general for even remote management of the plant, and also with a display for viewing on-site the parameters related to the biofuel and to the plant (level of the storage tank 14, temperatures of the temperature regulating tank 17, electric power generated by the engine 13, et cetera).

The operation of the plant 10 according to the invention is as follows.

When the engine 13 starts, the valve 24 is switched so that the intake pump 23 draws diesel fuel, i.e., the starting fuel, from the third tank 21 to send it to the engine 13, while at the same time the transfer pump 15 draws the biofuel 16 from the first storage tank 14 to pour it into the second tank 17 for regulating the temperature of the biofuel.

Control of the minimum temperature of the biofuel determines the reliability and durability of the plant, and until the biofuel in the regulating tank 17 has reached the preset temperature the engine runs on the starting fuel, which in this case, as mentioned, is diesel fuel.

Once the biofuel 26 in the regulating tank 17 has reached such minimum temperature, the electronic control unit, after receiving the temperature signal from the temperature sensor 33 associated with the regulating tank 17, switches the valve 24 so that the intake pump 23 operates by drawing from the regulating tank 17 and no longer from the third diesel fuel tank 21.

Whenever the level of biofuel 26 in the second tank 17 drops below a set minimum threshold, the minimum-level sensor 35 reports the event and the central control unit automatically starts the transfer pump 15 to top up the second tank 17; the top-up operation stops when the maximum-level sensor 34 reports that the level has been reached.

For the procedure for shutting down the engine 13, the control unit switches the valve 24 so that it draws from the third diesel fuel tank 21, so that elimination of biofuel residues in the line of the second circuit and in the engine 13 is ensured, so that when the biofuel cools no deposits form which can block the narrower passages.

The choice of the duration of the period of operation with diesel fuel before stopping the engine is an important factor for the durability of the engine 13.

The starting and shutdown periods with diesel fuel optimize the performance of the engine and its preservation.

The plant 10 according to the invention can thus be provided by using a diesel engine 13 of a substantially known type, to which the modifications cited above for coating the pistons 32, the needles 39 of the injectors and the pistons 41 of the injection pump are applied; the engine 13 can be supplied with both diesel fuel and biofuel and, although it is not mentioned, biogas supply is possible with appropriate modifications to the management means (storage, pumping, temperature regulation, et cetera) of such a biofuel.

The plant 10 ensures not only an energy efficiency which is not lower than that of known types of biomass plants, but also important advantages in the possibility to gain access to aids reserved by national and international laws for those who generate electric power from a renewable source and in the possibility to sell said electric power from a renewable source at favorable prices and terms.

In terms of environmental impact, the plant 10, tested experimentally, allows to obtain clean energy with a zero balance of carbon dioxide emissions, no emission of sulfur oxides, up to 70% suppression of particulates with respect to an equivalent diesel fuel plant, reduction by up to 50% of carbon monoxide emissions.

The plant 10 can be installed, as mentioned, also for cogeneration and trigeneration: it has been determined experimentally that the plant 10 according to the invention is capable of an energy balance in which out of 100 units of energy supplied by the fuel, 44 are mechanical energy and 56 are heat; 2 units of mechanical energy are used by the associated generator that powers the plant, approximately 2 more units are used by auxiliary uses, and 40 units of electric power are available.

45 units of heat are recovered from the exhaust gases and from the cooling water of the engine 13, while the remaining 11 are dispersed in the environment.

As a whole, the plant 10 is capable of using approximately 85% of the energy provided by the biofuel; a performance which is indicated as a medium-term goal even by the most recent energy-saving statutory provisions.

By comparison, one should consider that the current generation of methane power stations with a combined cycle achieve an electrical efficiency of 52% but allow no recovery of heat energy.

In practice it has been found that the invention thus described solves the problems noted in known types of biofuel plant for generating electric power and for cogeneration.

In particular, the present invention provides a biofuel plant for generating electric power and for cogeneration which runs on biofuel.

Moreover, the present invention provides a plant which is equipped with an engine which is set up to operate with biofuel more efficiently than known engines and is also more resistant to the action of the biofuel used than known engines.

Moreover, the present invention provides a plant which is capable of providing clean power without emissions of carbon dioxide and with emissions of particulate and carbon monoxide which are reduced considerably with respect to electric power generation plants which run on diesel fuel.

Further, the present invention provides a plant which can also be easily managed remotely.

Moreover, the present invention provides a plant which can be provided cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000290 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A biofuel plant particularly for generating electric power, **characterized in that** it comprises a first circuit (11) for storing and pretreating a fluid biofuel and a second supply circuit (12) for at least one compression-ignition internal-combustion reciprocating engine (13), said first circuit (11) in turn comprising a storage tank (14) from which, by means of a transfer pump (15), the biofuel (16) is drawn and sent to a tank (17) for regulating the temperature of said biofuel, a one-way valve (19) and a filter (20) for the biofuel (16) being provided on the connection line (18) between said storage tank (14) and said temperature regulating tank (17), said second circuit (12) being constituted by said temperature regulating tank (17), in parallel to which there is an additional auxiliary tank (21) for an additional fuel for starting and stopping the engine (13), and by a line (22) for supplying said engine (13) which is provided with an intake pump (23), said line (22) being functionally connected to said regulating tank (17) and said auxiliary tank (21) by means of the interposition of a switching valve (24) for selecting the tank (17, 21) from which drawing is to be performed, said supply line (22) being also provided with a heating device (25) for the biofuel, at least one filter (27) which is interposed between the intake pump (23) and the valve (24), and at least one additional filter (28), which is associated with said heating device (25) and an injection pump (29) which, by means of an associated distribution unit (30), is adapted to propel the aspirated fuel into the cylinders of said engine (13).

2. The plant according to claim 1, **characterized in that** the heads (37) of the pistons (32) of the engine (13) are at least partly coated with a ceramic protective layer (3 8).

3. The plant according to the preceding claims, **characterized in that** the needles (39) of the injectors (31) of said engine (13) are provided on their surface selectively with a passivating treatment or with a ceramic coating.

4. The plant according to the preceding claims, **characterized in that** at least the fuel compression surface (41) of the pistons (40) of the pumping elements (42) of the injection pump (29) is provided on its surface selectively with a passivating treatment or with a ceramic coating layer.

5. The plant according to one or more of the preceding claims, **characterized in that** said ceramic coating layer (38) is of the DLC (Diamond-Like Carbon) type, made of carbon which is almost as hard as diamond.

6. The plant according to one or more of the preceding claims, **characterized in that** said temperature regulating tank (17) for the biofuel is constituted by a box-like stainless steel body which is heated by means of exchanger means (36) which are supplied with hot water and by means of electrical resistors.

7. The plant according to one or more of the preceding claims, **characterized in that** said temperature regulating tank (17) is provided with temperature sensors (33) and level sensors (34, 35).

8. The plant according to one or more of the preceding claims, **characterized in that** said intake switching valve (24) is an electric valve, the operation of which is managed by an electronic unit for controlling the plant (10).

9. The plant according to one or more of the preceding claims, **characterized in that** said heating device (25) for the fuel is provided by a plate-like body (43) inside which there is a coiled duct (44) and there are seats (45) for electric heating resistors.

10. The plant according to one or more of the preceding claims, **characterized in that** said heating device (25) is interposed between said intake pump (23) and a pair of filters (28) in series which precede the injection pump (29).

11. The plant according to claim 10, **characterized in that** said engine (13) is of the six-cylinder four-stroke type.

12. The plant according to one or more of the preceding claims, **characterized in that** said fuel for the starting and stopping of the engine (13) is of the type not derived from biomass and is preferably diesel fuel.

13. The plant according to one or more of the preceding claims, **characterized in that** said biofuel (16) is of the liquid type.

14. The plant according to claim 13, **characterized in that** said biofuel (16) is selectively vegetable oil, biodiesel or another equivalent liquid fuel obtained from biomass.

15. The plant according to one or more of the preceding claims, **characterized in that** it is provided with a device for treating exhaust gases in order to control the values of the pollution burden and of the odors.

16. The plant according to one or more of the preceding claims, **characterized in that** said at least one additional filter (28) associated with said heating device (25) is constituted by a pair of filters which are installed downstream of said heating device (25).

17. The plant according to one or more of the preceding claims, **characterized in that** said at least one additional filter (28) which is associated with said heating device (25) is constituted by a pair of filters which are installed upstream of said heating device (25).
